# EUROPÄISCHE PATENTSCHRIFT

(11) **EP 3 718 201 B1**
(45) Veröffentlichungstag und Bekanntmachung des Hinweises auf die Patenterteilung: **07.12.2022**
(21) Anmeldenummer: 18785337.9
(22) Anmeldetag: 09.10.2018
(51) Int. Cl.: H02M 7/483, H02P 27/08, B60L 1/00, B60L 50/51

(54) **STROMRICHTERKOMPONENTE UND HALBLEITERMODUL EINER SOLCHEN STROMRICHTERKOMPONENTE**
POWER CONVERTER COMPONENT AND SEMICONDUCTOR MODULE OF SUCH A POWER CONVERTER COMPONENT
COMPOSANT REDRESSEUR ET MODULE SEMI-CONDUCTEUR D'UN COMPOSANT REDRESSEUR

(30) Priorität: 27.11.2017 DE 102017221184
(43) Veröffentlichungstag der Anmeldung: 07.10.2020
(73) Patentinhaber: Volkswagen Aktiengesellschaft, 38440 Wolfsburg (DE)
(72) Erfinder: KUSCH, Rüdiger, 38116 Braunschweig (DE)
(74) Vertreter: MFG Patentanwälte Meyer-Wildhagen Meggle-Freund Gerhard PartG mbB
(86) Internationale Anmeldenummer: PCT/EP2018/077382
(87) Internationale Veröffentlichungsnummer: WO 2019/101413

(56) Entgegenhaltungen:
- EP-A1- 3 238 978
- DE-A1-102008 037 064
- DE-A1-102011 015 694
- DE-A1-102013 202 649
- DE-A1-102014 226 159
- DE-A1-102016 206 835
- US-A1- 2014 286 060
- US-A1- 2017 050 528
- Fiarchild: "FPF2C110BI07AS2 F2, Boost and Inverter module with Press-fit", , 30. November 2016 (2016-11-30), XP055548874, Gefunden im Internet: URL:https://www.mouser.com/ds/2/149/FPF2C1 10BI07AS2-1082612.pdf [gefunden am 2019-01-29]
- Jeff S Casady ET AL: "Opportunities for Wide Bandgap Semiconductor Power Electronics for Hydrogen and Fuel Cell Applications Presenters", , 31. Oktober 2014 (2014-10-31), XP055548882, Gefunden im Internet: URL:https://www.energy.gov/sites/prod/file s/2014/10/f19/fcto_webinarslides_wide_band gap_semiconductor_102114.pdf [gefunden am 2019-01-29]

## Beschreibung

Die Erfindung betrifft eine Stromrichterkomponente für ein Kraftfahrzeug mit einer elektrischen Antriebsmaschine, insbesondere für ein effektives Energiemanagement eines elektrischen Antriebsstrangs, sowie ein Halbleitermodul einer solchen Stromrichterkomponente.

Heutige Kraftfahrzeuge mit einer elektrischen Antriebsmaschine weisen typischerweise einen Antriebsumrichter zum Umwandeln einer Gleichspannung einer Traktionsbatterie in eine Wechselspannung zum Betreiben der elektrischen Antriebsmaschine auf. Weiterhin kann ein Leistungssteller zum Laden der Traktionsbatterie bzw. zum Boosten der elektrischen Antriebsmaschine mittels einer Brennstoffzelle, einer Boostbatterie oder dergleichen vorgesehen sein.

Im Rahmen der Kosten-, Platz- und Gewichtsersparnis werden neuerdings Wege gesucht, einzelne Schaltungselemente mehrfach zu nutzen. Beispielsweise beschreibt die DE 10 2009 052 680 A1 eine Ladevorrichtung für eine Fahrzeugbatterie, die neben einem Elektromotor mit einem Antriebsumrichter einen Tiefsetzer aufweist, um eine Eingangsgleichspannung herabzusetzen. Dabei wirken der Antriebsumrichter und der Elektromotor bei festgebremstem Elektromotor gemeinsam als Hochsetzsteller. Eine ähnliche Ladevorrichtung wird durch die DE 10 2014 217 703 A1 offenbart. Es handelt sich also um eine Integration leistungselektronischer Komponenten an eine elektrische Antriebsmaschine.

Bei zukünftigen Antrieben mit hohen Anforderungen an die Performance bei gleichzeitiger Effizienz und Wirtschaftlichkeit existiert allerdings ein Konflikt zwischen einer erforderlichen Grundleistung (Dauerleistung) und einer erforderlichen Spitzenleistung (Peakleistung), die dem elektrischen Antrieb durch eine Hochvolt-Topologie zur Verfügung gestellt werden muss. Dabei sind ein kurzzeitiges Leistungsboosten wie auch ein DC-Schnellladen die bestimmende Größe für die Spitzenleistung. Von Seiten der Auslegung der Hochvolt-Topologie und des elektrischen Antriebs oder Batteriesystems kann es vorteilhaft sein, zu höheren Spannungen (800V) zu wechseln, wobei das DC-Schnellladenetz bzw. eine zusätzliche Leistungsquelle (typischerweise 400V) dies möglicherweise nicht unterstützen. Ein Leistungssteller ist somit erforderlich.

Die DE 10 2008 037 064 A1 beschreibt eine Schaltungsanordnung für einen elektrischen Antrieb. Die Schaltungsanordnung umfasst einen Wechselrichter, eine Energiequelle, eine Vorladeschaltung, einen Puffer und mehrere Schalter. Die Schalter werden so geschaltet, dass eine elektrische Maschine entweder mittels der Energiequelle oder des Puffers betrieben wird. Die DE 10 2013 202 649 A1 beschreibt eine Wechselrichteranordnung, die wahlweise im 3-Level-Betrieb oder im 2-Level-Betrieb betrieben werden kann. Im 2-Level-Betrieb werden die Schaltelemente des Mittelzweigs, die bei niedrigen Ausgangsspannungen im 3-Level-Betriebsehr stark belastet werden, nicht angesteuert.

Die DE 10 2014 226 159 A1 betrifft einen Wechselrichter mit einer abschaltbaren Ergänzungsschaltung. Je nach Energiebedarf kann die Ergänzungsschaltung zugeschaltet oder abgeschaltet werden.

Weitere Hintergrundinformationen zu Wechselrichtern liefern die DE 10 2016 206 835 A1, die US 2014/286060 A1, die US 2017/050528 A1, Fiarchild: "FPF2CÑBIO7AS2 F2, Boost and 6,9,10 Inverter module with Press-fit", 50. November 2016 (2016-11-30), die DE 10 2011 015 694 A1, die EP 3 238 978 A1 sowie Jeff S Casady et al.: Opportunities for 4-6,9 Wide Bandgap Semiconductor Power Electronics for Hydrogen and Fuel Cell Applications Presenters", 1. Oktober 2014 (2014-10-31).

Aufgabe der vorliegenden Erfindung ist es, eine Stromrichterkomponente und ein Halbleitermodul bereitzustellen, die es ermöglichen, den Leistungssteller volumen-, gewichts- und kostenoptimal auszubilden und, je nach Bedarf, die Grundleistung oder die Spitzenleistung bereitzustellen.

Diese Aufgabe wird durch die erfindungsgemäße Stromrichterkomponente nach Anspruch 1 gelöst.

Eine bevorzugte Ausführungsform wird in dem abhängigen Anspruch beschrieben.

Die vorliegende Erfindung betrifft eine Stromrichterkomponente für ein Kraftfahrzeug mit einer elektrischen Antriebsmaschine, beispielsweise für ein Plug-in-Hybrid-Fahrzeug (PHEV), ein Batterie-Elektrofahrzeug (BEV), ein Brennstoffzellenfahrzeug (FCEV) oder ein anderes Kraftfahrzeug mit einem elektrischen Antriebsmotor. Die elektrische Antriebsmaschine kann ein herkömmlicher Elektromotor sein, der insbesondere pro Phase genau eine Wicklung aufweist. Der Elektromotor weist vorzugsweise keinen Mittelabgriff und/oder keine Feststellbremse auf. Die Stromrichterkomponente, die auch als Fahrtumrichter oder Antriebsumrichter bezeichnet werden kann, weist eine mehrfachgenutzte leistungselektronische Baueinheit, beispielsweise ein oder mehrere mehrfachgenutzte leistungselektronische Bauteile oder Baugruppen, auf. Die mehrfachgenutzte leistungselektronische Baueinheit trägt wahlweise entweder zur Funktionalität eines Antriebsumrichters (Antriebsrichter-Funktionalität) oder zur Funktionalität eines Leistungsstellers beim Bereitstellen einer Spitzenleistung zum Betreiben der elektrischen Antriebsmaschine (Leistungsbooster-Funktionalität) bei. Eine Spitzenleistung (Peakleistung) kann dabei vorliegen, wenn eine von der elektrischen Antriebsmaschine benötigte Leistung größer als eine Grundleistung ist. Die benötigte Leistung kann insbesondere beim kurzfristigen Leistungsboosten erforderlich sein. Beispielsweise kann eine Spitzenleistung vorliegen, wenn die benötigte Leistung einen Leistungsschwellwert überschreitet, der größer als die Grundleistung ist, vorzugsweise um einige Prozent größer als die Grundleistung ist.

Der Antriebsumrichter integriert den erforderlichen Leistungssteller somit zumindest zum Teil und ermöglicht somit eine volumen-, gewichts- und kostenoptimale Integration von leistungselektronischen Baugruppen. Entgegen der Integration der leistungselektronischen Komponenten an die elektrische Antriebsmaschine, stellt die vorliegende Erfindung ein leistungsverzweigtes Stromrichtermodul für das Energiemanagement mit optimaler Ausnutzung der verwendeten leistungselektronischen Baugruppen bereit.

Die mehrfachgenutzte leistungselektronische Baueinheit umfasst eine antiparallele Schaltung zweier Leistungsschalter (antiparallele Leistungsschalter). Die zwei antiparallelen Leistungsschalter können Transistoren sein, beispielsweise IGBTs, wie Si-IGBTs, oder auch Wide-Bandgap-Halbleiter, wie SiC-MOSFETs. Die zwei antiparallelen Leistungsschalter dienen in ihrer Antriebsrichter-Funktionalität dazu, dass die Stromrichterkomponente als Antriebsumrichter arbeitet, und in ihrer Leistungsboost-Funktionalität, dass die Stromrichterkomponente in einem Spitzenlastbereich einen Boost-Beitrag leistet. Beispielsweise unterstützen die zwei antiparallelen Leistungsschalter einen externen Leistungssteller beim Leistungsboosten oder sie bilden einen Teil eines integrierten Leistungstellers, der zum Leistungsboosten beiträgt. Folglich sind einzelne Komponenten eines Leistungsstellers, die das Leistungsboosten unterstützen, in die Stromrichterkomponente integriert. Gegebenenfalls können auch Komponenten des Leistungsstellers, die die Grundleistung bereitstellen, in die Stromrichterkomponente integriert sein.

Die Stromrichterkomponente weist weiterhin eine serielle Schaltung zweier Leistungsschalter (serielle Leistungsschalter) auf, die wahlweise zu einer 2-Level-Antriebsumrichter-Funktionalität beitragen oder zu einer 3-Level-Antriebsumrichter-Funktionalität beitragen. Während die mehrfachgenutzte leistungselektronische Baueinheit zur Funktionalität des Antriebsumrichters beiträgt, kann die Stromrichterkomponente als 3-Level-Antriebsumrichter betrieben werden. Während die mehrfachgenutzte leistungselektronische Baueinheit zur Funktionalität des Leistungsstellers beim Bereitstellen einer Spitzenleistung beiträgt, kann die Stromrichterkomponente als 2-Level-Antriebsumrichter betrieben werden und zur Unterstützung des Leistungsboostens beitragen. Die Stromrichterkomponente ermöglicht während des Fahrens die Nutzung der mehrfachgenutzten leistungselektronischen Baueinheit zur Unterstützung des Leistungsstellers, der ein externer oder ein teilweise oder vollständig integrierter Leistungssteller sein kann. Die mehrfachgenutzte leistungselektronische Baueinheit kann zur Leistungsbooster-Funktionalität beitragen, auch wenn die elektrische Antriebsmaschine nicht festgebremst ist.

Die zwei seriellen Leistungsschalter können auch wahlweise zu einer ersten und einer zweiten Multi-Level-Funktionalität beitragen, beispielsweise wahlweise zu einer (n-1)-Level-Antriebsumrichter-Funktionalität oder zu einer n-Level-Antriebsumrichter-Funktionalität beitragen, wobei n größer 3 ist. Multilevel- bzw. 3-Level-Umrichter für den Fahrantrieb bewirken nur geringe harmonische Verluste der elektrischen Antriebsmaschine in Form von Eisen- und Kupferverlusten sowie eine Verteilung und Minimierung der Schaltverluste und ein geringes dU/dt.

Die zwei seriellen Leistungsschalter können Transistoren sein, beispielsweise IGBTs, wie Si-IGBTs, oder auch Wide-Bandgap-Halbleiter, wie SiC-MOSFETs. Wide-Bandgap-Halbleiter lassen eine signifikant höhere Schaltfrequenz als Si-IGBTs zu und verringern Verluste. Folglich werden Wide-Bandgap-Halbleiter in die Stromrichterkomponente integriert und es resultiert ein Si/SiC Hybridsystem. Die Leistungsbooster-Funktion kann bei Verwendung von Wide-Bandgap-Halbleitern mit einer signifikanten Erhöhung der Schaltfrequenz realisiert sein. Dies erlaubt eine signifikante Verkleinerung von Größe und Gewicht des externen Leistungssteller, insbesondere dessen Drosseln, bzw. der Bauteile der Stromrichterkomponente im Falle des integrierten Leistungsstellers. Der Leistungsteller kann weitere Baugruppen mit Wide-Bandgap-Halbleitern, beispielsweise SiC-Leistungsschalter, umfassen.

Zum Beispiel kann eine im durchschnittlichen Fahrzyklus erforderte Leistung (Grundleistung) über einen externen hochintegrierten mehrphasigen Leistungssteller abgedeckt werden, während für Spitzenleistungen und ein Schnellladeboosten ein Teil der vorhandenen leistungselektronischen Baueinheiten aus der Stromrichterkomponente zusätzlich, also parallel verwendet werden. Die Stromrichterkomponente kann dafür Schütze umfassen, so dass die Stromrichterkomponente im weniger effizienten 2-Level-Betrieb angesteuert werden kann, während verbleibende leistungselektronische Schalter und Drosseln zur zusätzlichen Leistungsstellung verwendet werden. Für den Betriebsfall "Boosten im Fahren" können kurzzeitig erhöhte Verluste in der Antriebsmaschine durch das 2-Level-Pulsmuster in Kauf genommen werden, damit die Boostleistung im Gesamtsystem abgedeckt werden kann. Somit kann der externe hochintegrierte mehrphasige Leistungssteller klein und nur zur Abdeckung der Grundlast ausgelegt werden. Beim Laden (Ladeboosten für 400/800V Systeme) ist die Antriebsmaschine vorzugsweise im Stillstand und die mehrfachgenutzte leistungselektronische Baueinheit der Stromrichterkomponente kann über die Drosseln zum Laden der Batterie parallel zu dem externen Leistungssteller genutzt.

Die Stromrichterkomponente weist weiterhin eine Boost-Baueinheit auf, die zur Funktionalität des Leistungsstellers beim Bereitstellen einer Grundleistung und der Spitzenleistung zum Betreiben der elektrischen Antriebsmaschine beiträgt. Der Leistungssteller, der zum Decken einer Grundlast ausgelegt ist, kann somit teilweise oder auch vollständig in die Stromrichterkomponente integriert sein. Die Stromrichterkomponente kann auch mehrere Boost-Baueinheiten aufweisen, vorzugsweise nx3 Boost-Baueinheiten, wobei n eine natürliche Zahl ist.

Die Boost-Baueinheit umfasst einen Leistungsschalter, eine erste Diode, die parallel zum Leistungsschalter geschaltet ist, und eine zweite Diode, die in Serie mit dem Leistungsschalter und der ersten Diode geschaltet ist. Der Leistungsschalter kann ein Transistor sein, vorzugswiese ein Wide-Bandgap-Halbleiter wie ein SiC-MOSFET.

Die mehrfachgenutzte leistungselektronische Baueinheit und die Boost-Baueinheit ist in einem Halbleitermodul beispielsweise auf Basis eines A-NPC Designs integriert, bei dem die Boost-Baueinheit parallel zu der seriellen Schaltung zweier Leistungsschalter geschaltet ist. Das Halbleitermodul wird weiter unten im Detail beschrieben. Alternativ können die mehrfachgenutzte leistungselektronische Baueinheit und die Boost-Baueinheit in einem Halbleitermodul beispielsweise auf Basis eines T-NPC Designs integriert sein.

Die erfindungsgemäße Stromrichterkomponente gegebenenfalls in Kombination mit dem externen Leistungssteller ist vorzugsweise dazu ausgebildet, eine 800V-Hochvolt-Topologie des Antriebsstrangs an ein existierendes 400V-Schnellladenetz anzubinden. Alternativ kann sie auch in einer 400V-Hochvolt-Topologie zu Anwendung kommen oder eine 800V-Hochvolt-Topologie des Antriebsstrangs an ein 800V-Schnellladenetz anbinden.

Die mehrfachgenutzte leistungselektronische Baueinheit ist mit einem steuerbaren Schütz gekoppelt, der je nach Ansteuerung die mehrfachgenutzte leistungselektronische Baueinheit entweder in der Funktionalität des Antriebsumrichters oder in der Funktionalität des Leistungsstellers beim Bereitstellen einer Spitzenleistung betreibt. Weiterhin kann die mehrfachgenutzte leistungselektronische Baueinheit mit einem weiteren Schütz gekoppelt sein, der die mehrfachgenutzte leistungselektronische Baueinheit, wenn sie in der Funktionalität des Antriebsumrichters betrieben wird, mit einem Nullabgriff verbindet und, wenn sie in der Funktionalität des Leistungsstellers beim Bereitstellen einer Spitzenleistung betrieben wird, mit einem Spannungseingang einer Boostbatterie, einer Brennstoffzelle, eines Range-Extenders und/oder einer Ladestation verbindet.

Die mehrfachgenutzte leistungselektronische Baueinheit ist mit einer Glättungsdrossel und/oder einer Diode gekoppelt. Im Leistungsbooster-Betrieb dienen die Glättungsdrossel und die Diode insbesondere zum Stellen einer Spitzenleistung. Die Boost-Baueinheit kann mit einer Drossel koppelbar sein, die zum Bereitstellen der Grundleistung beiträgt.

Vorzugsweise ist die Funktionalität des Leistungsstellers beim Bereitstellen einer Spitzenleistung zur Leistungswandlung einer Boostbatterie, insbesondere einer Hochleistungs-Boostbatterie oder eines Supercap, einer Brennstoffzelle, eines Range-Extenders, insbesondere mit kleinem Verbrennungsmotor, und/oder einer Ladestation vorgesehen. Die Stromrichterkomponente kann dazu so ausgelegt sein, dass die Funktionalität des Leistungsstellers wahlweise für das Aufwärtswandeln der Leistung eines DC-Lademoduls oder für das Aufwärtswandeln der Leistung einer Boostbatterie, einer Brennstoffzelle und/oder eines Range-Extenders genutzt werden kann.

Die Ansteuerung für die Stromrichterkomponente und den externen Leistungssteller bzw. die Stromrichterkomponente mit integriertem Leistungssteller kann durch eine gemeinsame Steuereinheit erfolgen. Treiber, Verbinder, Sensoren und Software können somit für alle Modi verwendet werden. Resonanzeffekte und Schwingungseffekte sind mit diesem Ansatz leichter kontrollierbar, da eine gemeinsame Regelungsplattform mit abgestimmten Abtastraten, Regelparametern und Kreisbandbreiten gezielt gewählt und arbeitspunktabhängig eingestellt werden kann.

Zusammenfassend stellt die vorliegende Erfindung ein leistungsverzweigtes Stromrichtermodul für das Energiemanagement mit optimaler Ausnutzung der verwendeten leistungselektronischen Baugruppen bereit, das sich durch geringe Verluste auszeichnet und gleichzeitig hinsichtlich seiner Größe und Kosten optimiert ist. Die Anzahl der benötigten passiven Komponenten, wie Zwischenkreiskapazitäten, Drosseln, Stromschienen, EMV-Filter und dergleichen kann durch diesen Ansatz reduziert werden.

Die vorliegende Erfindung betrifft weiterhin ein Halbleitermodul für eine Stromrichterkomponente, wobei das Halbleitermodul nach dem A-NPC Design mit zwei seriellen Leistungsschaltern und zwei antiparallelen Leistungsschaltern ausgelegt ist und weiterhin eine Boost-Baueinheit aufweist, die parallel zu den zwei seriellen Leistungsschaltern geschaltet ist.

Die beiden antiparallelen Leistungsschalter sind mit einem Mittenabgriff des Halbleitermoduls verbunden und sind zudem mit einem zusätzlichen Modulabgriff verbunden. Auf diese Weise kann das Halbleitermodul in zwei verschiedenen Betriebsmodi betrieben werden. Das Halbleitermodul arbeitet beispielsweise entweder als konventionelles 3-Level-Modul nach dem A-NPC Design oder in einem 2-Level-Betriebsmodus mit zusätzlicher Leistungsbooster-Funktion. Ein Wechsel zwischen den beiden Betriebsmodi kann beispielsweise dadurch erzielt werden, dass für das Halbleitermodul ein weiterer zusätzlicher Modulabgriff vorgesehen wird, der mit dem Mittelpunkt der beiden seriellen IGBTs verschaltet ist, so dass durch Kontaktierung eines externen steuerbaren Schütz an die beiden zusätzlichen Modulabgriffe zwischen den beiden Betriebsmodi gewechselt werden kann. Der Mittenabgriff kann mit einem externen steuerbaren Schütz koppelbar sein, der die antiparallelen Leistungsschalter entweder mit dem Nullpunkt (in der Antriebsrichter-Funktionalität) oder mit dem Minus-Anschluss (in der Leistungsbooster-Funktionalität) des Zwischenkreises verbindet. Die Booster-Baueinheit kann einen Leistungsschalter, eine erste Diode, die parallel zum Leistungsschalter geschaltet ist, und eine zweite Diode, die in Serie mit dem Leistungsschalter und der ersten Diode geschaltet ist, umfassen. Die Booster-Baueinheit kann zwischen dem Leistungsschalter und der zweiten Diode der Booster-Baueinheit einen weiteren Modulabgriff aufweisen. Der Leistungsschalter kann weiterhin mit einem Minus-Anschluss des Zwischenkreises verbunden sein und die zweite Diode kann kathodenseitig mit dem Plus-Anschluss eines Zwischenkreises verbunden sein.

Die Leistungsschalter des Halbleitermoduls können Transistoren sein, beispielsweise IGBTs, wie Si-IGBTs, oder auch Wide-Bandgap-Halbleiter, wie SiC-MOSFETs. Vorzugsweise sind die zwei antiparallelen Leistungsschalter Si-IGBTs, während die zwei seriellen Leistungsschalter und der Leistungsschalter der Boost-Baueinheit SiC-MOSFETs sind. Dies ermöglicht eine erhöhte Schaltfrequenz und damit die Reduzierung der Größe von Drosseln und Schützen.

Die beiden antiparallelen Leistungsschalter können, wie oben bereits erwähnt, mit dem Mittenabgriff des Halbleitermoduls und mit dem zusätzlichen Modulabgriff des Halbleitermoduls verbunden sein und das Halbleitermodul kann ferner eine Diode und einen weiteren Modulabgriff aufweisen, wobei die Diode kathodenseitig mit dem Plus-Anschluss eines Zwischenkreises und anodenseitig mit dem weiteren Modulabgriff verbunden ist. Die Diode trägt zur Leistungsbooster-Funktionalität bei. Zusammenfassend wird ein hochintegriertes Halbleitermodul für einen Multi-Level-Fahrumrichter bereitgestellt. Das Halbleitermodul integriert einen Teil eines Leistungsstellers vorzugsweise in Form eines SiC-Boost-Moduls für den DC/DC-Wandler. Das hochintegrierte Halbleitermodul weist eine einfache und effiziente Kühlanbindung und ein leistungsdichtes Design auf.

Die Erfindung wird nun beispielhaft und unter Bezugnahme auf die beigefügten Zeichnungen beschrieben. Es zeigt:
- Fig. 1: ein 3-Level-Modul im A-NPC Design mit zwei zusätzlichen Modulabgriffen;
- Fig. 2: ein erstes Ausführungsbeispiel einer erfindungsgemäßen Hochvolttopologie;
- Fig. 3: ein 3-Level-Modul im A-NPC Design mit zwei zusätzlichen Modulabgriffen und einem zusätzlichen Booststrang; und
- Fig. 4: ein zweites Ausführungsbeispiel einer erfindungsgemäßen Hochvolttopologie, wobei ein Leistungssteller in den Antriebsumrichter integriert ist.

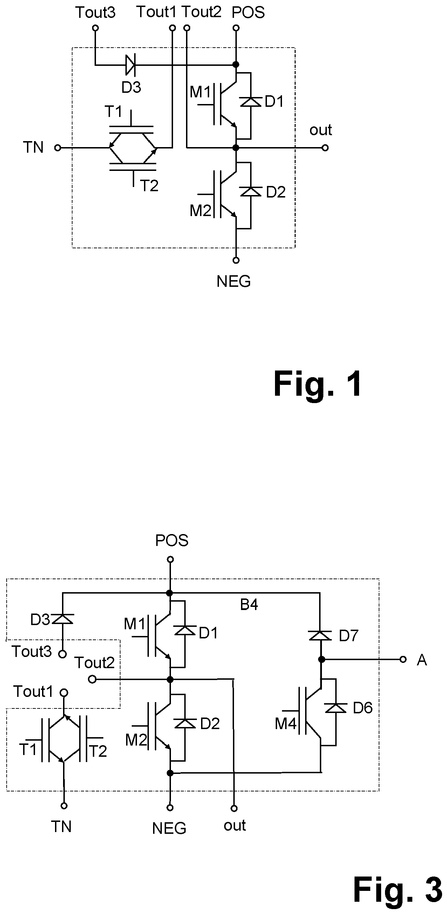

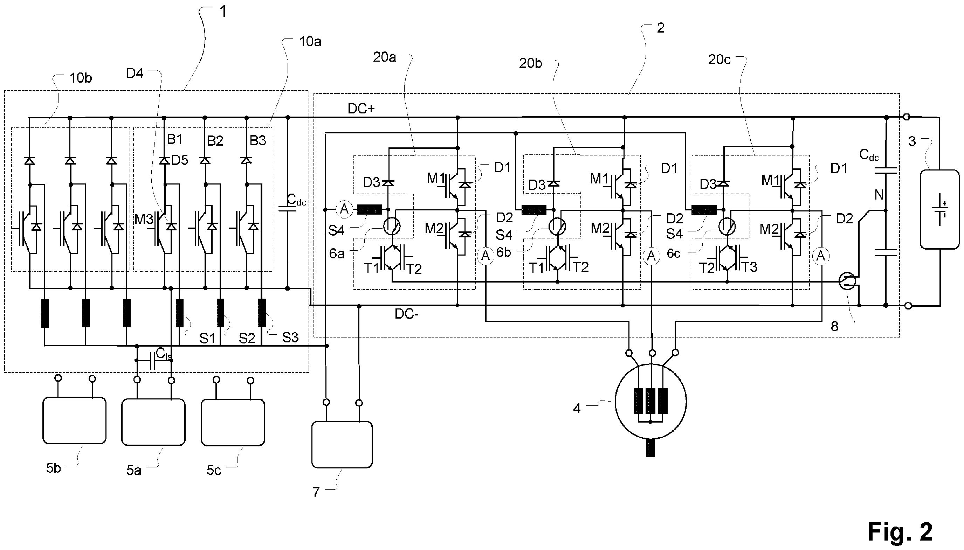

Fig. 1 zeigt ein Halbleitermodul im A-NPC Design mit zwei zusätzlichen Modulabgriffen. Das 3-Level-Modul im A-NPC Design umfasst zwei Si-IGBTs T1, T2, zwei serielle SiC-MOSFETs M1, M2 und zwei Dioden D1, D2. Die zwei seriellen MOSFETs M1, M2 mit den antiparallelen Dioden D1, D2 sind zwischen einem Plus-Anschluss POS und einem Minus-Anschluss NEG zum Verbinden mit einem Zwischenkreis geschaltet. Die zwei antiparallelen Si-IGBTs T1, T2 sind als RB-IGBTs (RB = Reverse Blocking) ausgeführt. Die beiden antiparallelen Si-IGBTs T1, T2 sind mit einem Mittenabgriff TN zum Verbinden mit einem Zwischenkreismittelpunkt N (Neutralpunkt) verbunden und zudem mit einem zusätzlichen Modulabgriff Tout1. Das Halbleitermodul weist ferner einen weiteren zusätzlichen Modulabgriff Tout2 auf, der modul-intern mit dem Wechselspannungsausgang out des Halbleitermoduls verbunden ist. Wird der zusätzliche Modulabgriff Tout1 mit dem Modulabgriff Tout2 verbunden (beispielsweise mittels eines modul-externen steuerbaren Schütz, wie dies in Fig. 2 gezeigt ist), so werden die beiden antiparallelen Si-IGBTs T1, T2 zwischen einen Wechselspannungsausgang out und den Mittelabgriff TN geschaltet. In diesem Betriebsmodus arbeitet das Halbleitermodul der Fig.1 wie ein herkömmliches 3-Level-Modul im A-NPC Design. Wird der zusätzliche Modulabgriff Tout1 nicht mit dem Modulabgriff Tout2 verbunden, so kann das 3-Level-Modul der Fig. 1 in einem 2-Level-Betriebsmodus arbeiten, bei dem die seriellen MOSFETs T1, T2 für eine 2-Level-Stromrichtung genutzt werden und die beiden antiparallelen Si-IGBTs T1, T2 für eine Leistungsbooster-Funktionalität genutzt werden können. Das Halbleitermodul weist eine zusätzliche Diode D3 und einen zusätzlichen Modulabgriff Tout3 auf. Die zusätzliche Diode D3 kann für die Leistungsbooster-Funktionalität genutzt werden.

Wie es von 3-Level-Modulen im A-NPC Design bekannt ist, weist das Halbleitermodul für die Ansteuerung der IGBTs sowie der MOSFETs weitere Abgriffe auf, die in Fig. 1 nicht gezeigt sind. Das Modul kann, wie es von 3-Level-IGBT-Modulen im herkömmlichen A-NPC Design bekannt ist, beispielsweise als HVIC (High Voltage Integrated Circuit) in SOI-Technologie (Silicon on Insulator) oder dergleichen ausgebildet werden.

Fig. 2 zeigt ein erstes Ausführungsbeispiel einer erfindungsgemäßen Hochvolttopologie. Diese umfasst einen Leistungssteller 1, einen Antriebsumrichter 2, der beim Leistungsboosten zur Funktionalität des Leistungsstellers 1 beiträgt, eine Hochvoltbatterie 3 und einen Elektromotor 4.

Der Leistungssteller 1 besitzt eine 6-phasige Anordnung aus zwei SiC-Boost-Modulen 10a, 10b mit je drei Booststrängen B1, B2, B3. Jeder Booststrang B1, B2, B3 umfasst einen SiC-MOSFET M3 und eine erste Diode D4, die parallel zueinander geschaltet sind, sowie eine zweite Diode D5, die in Serie zu dem SiC-MOSFET M3 und der ersten Diode D4 geschaltete ist. Die Booststränge B1, B2, B3 sind jeweils zwischen einen Plus-Bereich DC+ eines Zwischenkreises und einen Minus-Bereich DC- des Zwischenkreises geschaltet. Zwischen dem MOSFET M3 und der ersten Diode D4 einerseits und der zweiten Diode D5 andererseits ist jeder Booststrang B1, B2, B3 über eine Drossel S1, S2, S3 mit einem ersten Leistungsausgang 11 wahlweise einer Brennstoffzelle 5a, einer Boostbatterie 5b oder eines Range-Extenders 5c mit einem kleinen Verbrennungsmotor verbunden. Ein zweiter Leistungsausgang 12 der Brennstoffzelle 5a, der Boostbatterie 5b bzw. des Range-Extenders 5c ist mit dem Minus-Bereich DC- des Zwischenkreises gekoppelt.

Der Antriebsumrichter 2 wandelt als Antriebsumrichter die Spannung der Hochvoltbatterie 3 in eine Wechselspannung und versorgt damit den Elektromotor 4. Der Antriebsumrichter 2 ist als ein 3-Level-Umrichter ausgelegt und umfasst neben einem Kondensator C_{dc} drei Halbleitermodule 20a, 20b, 20c, die als Halbbrücken konzipiert sind. Die drei Halbleitermodule 20a, 20b, 20c sind jeweils nach dem modifizierten A-NPC Design ausgelegt, wie es in Fig. 1 genauer beschrieben ist. Der erste und der zweite zusätzliche Modulabgriff (Tout1, Tout2 in Fig. 1) des ersten Halbleitermoduls 20a verbinden das erste Halbleitermodul 20a mit einem steuerbaren Schütz 6a. In einer ersten Stellung des steuerbaren Schütz 6a sind die IGBTs T1, T2 des ersten Halbleitermoduls 20a auf herkömmliche Weise mit dem Wechselspannungs-Modulabgriff (out in Fig. 1) des Halbleitermoduls 20a verbunden. Das Halbleitermodul 20a wirkt wie ein herkömmliches A-NPC Modul im 3-Level-Betrieb zusammen mit dem Kondensator C_{dc} als Antriebsumrichter. In einer zweiten Stellung des steuerbaren Schütz 6a ist die elektrische Verbindung zwischen den antiseriellen MOSFETs M1, M2 und dem Wechselspannungs-Modulabgriff out unterbrochen. Stattdessen sind die MOSFETs M1, M2 über den ersten zusätzlichen Modulabgriff (Tout1 in Fig. 1) mit einer externen Spannungsquelle 7, wie beispielsweise einem Stromnetz, und wahlweise der Brennstoffzelle 5a, der Boostbatterie 5b und dem Range-Extender 5c und über den dritten zusätzlichen Modulabgriff (Tout3 in Fig. 1) mit der Diode D3 verbunden. In dieser Stellung des steuerbaren Schütz 6a übernimmt somit der zweite MOSFET M2 der beiden antiseriellen MOSFETs die Funktion eines Leistungsschalters eines Booststrangs eines herkömmlichen separaten Leistungsstellers und trägt zur Leistungsbooster-Funktionalität bei. Auf analoge Weise verbinden der erste und der zweite zusätzliche Modulabgriff des zweiten Halbleitermoduls 20b das zweite Halbleitermodul 20b mit einem steuerbaren Schütz 6b und der erste und der zweite zusätzliche Modulabgriff des dritten Halbleitermoduls 20c das dritte Halbleitermodul 20c mit einem steuerbaren Schütz 6c.

Zwischen den antiparallelen MOSFETs M1, M2 der drei Halbleitermodule 20a, 20b, 20c und dem Mittenabgriff N zum Verbinden des Moduls an den Zwischenkreis ist ein Schütz 8 vorgesehen, der in der ersten Stellung die drei Halbleitermodule mit dem Nullpunkt N und in der zweiten Stellung mit dem Minus-Bereich DC- des Zwischenkreises verbindet. Die erste Stellung wird eingenommen, wenn sich die Schütze 6a, 6b und 6c in der ersten Stellung befinden und die zweite Stellung wird eingenommen, wenn sich die Schütze 6a, 6b und 6c in der zweiten Stellung befinden.

Folglich tragen die antiparallelen MOSFETs M1, M2, die Diode D3 und eine über den jeweiligen Schütz 6a, 6b, 6c mit diesen gekoppelte Drossel S4 zum Bereitstellen einer Spitzenleistung beim Leistungsboosten bei.

Dadurch kann der Antriebsumrichter 1 in der ersten Stellung der steuerbaren Schütze 6a, 6b, 6c, 8 in einem Betriebsmodus "Antriebsumrichter" betrieben werden, bei dem die Halbleitermodule 20a, 20b und 20c auf herkömmliche Weise als 3-Level-Module nach dem A-NPC zur Wandlung der Gleichspannung der Hochvoltbatterie 3 dienen, um den Elektromotor 4 zu betreiben. In der zweiten Stellung der steuerbaren Schütze 6a, 6b, 6c, 8 wird der Antriebsumrichter 1 in einem Betriebsmodus "Leistungsboosten" betrieben und liefert gemeinsam mit dem Leistungssteller 1 die Spitzenleistung. Da der externe Leistungssteller 1 dadurch eine geringere Leistung liefern muss, also nur die Grundlast decken muss, kann er kleiner, leichter und kostengünstiger dimensioniert sein.

Unter Verwendung von SiC-Halbleitern kann eine signifikante Erhöhung der Schaltfrequenz realisiert werden. Dies hat einen starken Einfluss auf Größe und Gewicht der Komponenten des Leistungsstellers 1. Gemäß einem Ausführungsbeispiel werden der Halbbrückenzweig, insbesondere die MOSFETs M1, M2 mit 1200V SiC-Halbleitern und die antiparallelen IGBTs T1, T2 mit 600V Si- Halbleitern ausgeführt. Der erfindungsgemäße Antriebsumrichter kann mit beliebigen Spannungslagen arbeiten. Auf Seiten der Hochvoltbatterie 3 kann es sich beispielsweise um ein 400V / 800V System handeln.

Die Ansteuerung der Leistungsschalter beim Wechsel vom 3-Level-Antriebsumrichterbetrieb in den Batterieladebetrieb kann hart erfolgen, indem direkt von einer dem Fachmann bekannten 3-Level-Ansteuerung auf eine Batterielade-Ansteuerung umgeschaltet wird.

Fig. 3 zeigt ein Halbleitermodul im modifizierten A-NPC Design mit zwei zusätzlichen Modulabgriffen, das zusätzlich einen Booststrang B4 umfasst. Jeder Booststrang B4 umfasst einen SiC-MOSFET M4 und eine erste Diode D6, die parallel zueinander geschaltet sind, sowie eine zweite Diode D7, die in Serie zu dem SiC-MOSFET M4 und der ersten Diode D6 geschaltete ist. Der Booststrang B4 ist zwischen einen Plus-Anschluss POS des Zwischenkreises und dem Minus-Anschluss NEG des Zwischenkreises angeordnet, dass die zweite Diode D7 kathodenseitig mit dem Plus-Anschluss POS verbunden ist. Zwischen dem MOSFET M4 und der ersten Diode D6 einerseits und der zweiten Diode D7 andererseits ist der Booststrang B4 mit einem weiteren Modulabgriff A verbunden. Durch die Integration des Booststrangs B4 in das Halbleitermodul kann auf eine separate Kühlung und Überwachung des Booststrangs B4 verzichtet werden.

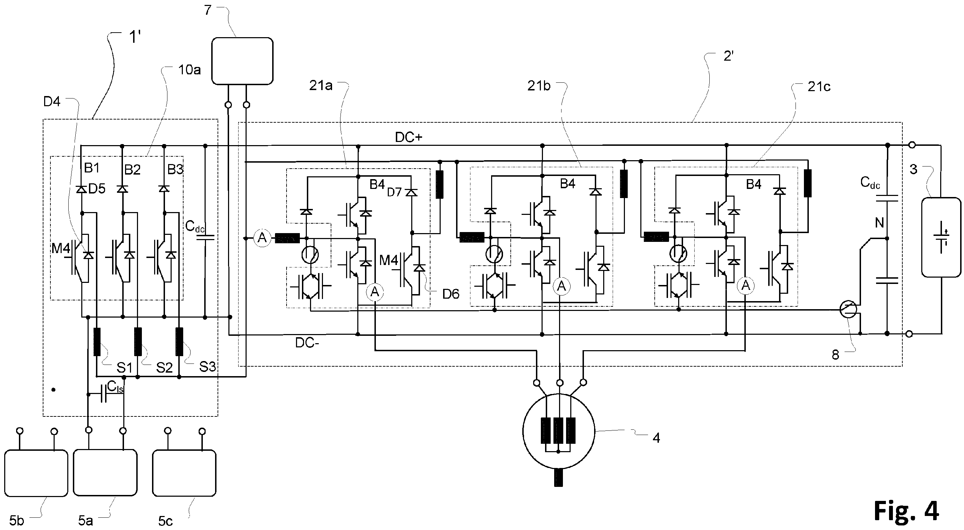

Fig. 4 zeigt ein zweites Ausführungsbeispiel einer erfindungsgemäßen Hochvolttopologie. Diese umfasst einen 3-phasigen Leistungssteller 1', einen Antriebsumrichter 2', der zusätzliche Booststränge B4 aufweist, um zur Funktionalität des Leistungsstellers 1' beizutragen, eine Hochvoltbatterie 3 und einen Elektromotor 4.

Im Gegensatz zu dem ersten Ausführungsbeispiel sind die Booststränge des zweiten SiC-Boost-Moduls 10b als Booststränge B4 in den Antriebsumrichter 2' integriert. Der Antriebsumrichter 2' umfasst drei Halbleitermodule 21a, 21b, 21c, die jeweils nach dem modifizierten A-NPC Design ausgelegt sind, wie es in Fig. 3 genauer beschrieben ist. Außerdem umfasst der Antriebsumrichter 2' zusätzliche Drosseln S5, die zusammen mit den Booststrängen B4 der Halbleitermodule 21a, 21b, 21c und dem Leistungssteller 1' zum Bereitstellen der Grundleistung sowie der Spitzenleistung beitragen.

### Bezugszeichenliste

- 1,1': Leistungssteller
- 10a, 10b: SiC-Boost-Modul
- 11: erster Leistungsausgang
- 12: zweiter Leistungsausgang
- 2,2': Antriebsumrichter
- 20a, 20b, 20c, 21a, 21b, 21c: Halbleitermodule
- 3: Hochvoltbatterie
- 4: Elektromotor
- 5a: Brennstoffzelle
- 5b: Boostbatterie
- 5c: Range-Extender
- 6a, 6b, 6c: externe steuerbare Schütze
- 7: Stromnetz
- 8: Schütz

- B1, B2, B3, B4: Booststrang
- D1, D2, D3, D4, D5, D6, D7: Dioden
- M1, M2, M3, M4: MOSFETs
- N: Nullpunkt
- Out: Wechselspannungsausgang
- POS: Plus-Anschluss
- S1, S2, S3, S4, S5: Drosseln
- T1, T2: IGBTs
- TN: Mittelabgriff
- Tout1, Tout2, Tout3, A: zusätzliche Modulabgriffe

## Patentansprüche

1. Stromrichterkomponente für ein Kraftfahrzeug mit einer elektrischen Antriebsmaschine (4), umfassend:
eine mehrfachgenutzte leistungselektronische Baueinheit (T1, T2), die dazu eingerichtet ist, wahlweise entweder zur Funktionalität eines Antriebsumrichters beizutragen oder zur Funktionalität eines Leistungsstellers (1) beim Bereitstellen einer Spitzenleistung zum Betreiben der elektrischen Antriebsmaschine (4) beizutragen, wobei die mehrfachgenutzte leistungselektronische Baueinheit eine antiparallele Schaltung zweier Leistungsschalter (T1, T2) umfasst,
eine serielle Schaltung zweier Leistungsschalter (M1, M2), und
zwei Dioden (D1, D2), die antiparallel zur seriellen Schaltung der Leistungsschalter (M1, M2) geschaltet sind,
wobei die serielle Schaltung der beiden Leistungsschalter (M1, M2) mit den antiparallelen Dioden (D1, D2) zwischen einem Plus-Anschluss (POS) und einem Minus-Anschluss (NEG) zum Verbinden mit einem Zwischenkreis geschaltet sind,
wobei die mehrfachgenutzte leistungselektronische Baueinheit (T1, T2) mit einem Mittenabgriff (TN) zum Verbinden mit einem Zwischenkreismittelpunkt (N) und mit einem zusätzlichen Modulabgriff (Tout1) verbunden ist,
wobei die Stromrichterkomponente weiterhin einen weiteren zusätzlichen Modulabgriff (Tout2) aufweist, der modul-intern mit einem Wechselspannungsausgang (out) der Stromrichterkomponente verbunden ist,
wobei der zusätzliche Modulabgriff (Tout1) mit dem Modulabgriff (Tout2) verbindbar ist, um die mehrfachgenutzte leistungselektronische Baueinheit (T1, T2) zwischen den Wechselspannungsausgang (out) und den Mittelabgriff (TN) zu schalten, dass die mehrfachgenutzte leistungselektronische Baueinheit (T1, T2) zur Funktionalität des Antriebsumrichters beiträgt, und
wobei der zusätzliche Modulabgriff (Tout1) von dem Modulabgriff (Tout2) trennbar ist, dass die mehrfachgenutzte leistungselektronische Baueinheit (T1, T2) zur Funktionalität eines Leistungsstellers (1) beim Bereitstellen einer Spitzenleistung zum Betreiben der elektrischen Antriebsmaschine (4) beiträgt,
wobei die Stromrichterkomponente weiterhin eine zusätzliche Diode (D3) und einen zusätzlichen Modulabgriff (Tout3) aufweist, wobei die zusätzliche Diode (D3 ) für die Funktionalität des Leistungsstellers nutzbar ist.

2. Stromrichterkomponente nach Anspruch 1, wobei die serielle Schaltung der beiden Leistungsschalter (M1, M2) dazu eingerichtet ist wahlweise zu einer 2-Level- Antriebsumrichter-Funktionalität beizutragen oder zu einer 3-Level-Antriebsumrichter-Funktionalität beizutragen, wobei die Stromrichterkomponente (2) dazu eingerichtet ist, während die mehrfachgenutzte leistungselektronische Baueinheit (T1, T2) zur Funktionalität des Antriebsumrichters beiträgt, als 3-Level-Antriebsumrichter betrieben zu werden.

3. Stromrichterkomponente nach Anspruch 1 oder 2, wobei die Stromrichterkomponente (2) weiterhin eine Boost-Baueinheit (B4) aufweist, die dazu eingerichtet ist, zur Funktionalität des Leistungsstellers (1) beim Bereitstellen einer Grundleistung und der Spitzenleistung zum Betreiben der elektrischen Antriebsmaschine (4) beizutragen.

4. Stromrichterkomponente nach Anspruch 3, wobei die Boost-Baueinheit (B4) einen Leistungsschalter (M3), eine erste Diode (D6), die parallel zum Leistungsschalter (M3) geschaltet ist, und eine zweite Diode (D7), die in Serie mit dem Leistungsschalter (M3) und der ersten Diode (D6) geschaltet ist, umfasst.

5. Stromrichterkomponente nach einem der Ansprüche 3 oder 4, wobei die mehrfachgenutzte leistungselektronische Baueinheit (T1, T2) und die Boost-Baueinheit (B4) in einem Halbleitermodul (20a) auf Basis eines A-NPC Designs integriert sind, bei dem die Boost-Baueinheit (B4) parallel zu der seriellen Schaltung zweier Leistungsschalter (M1, M2) geschaltet ist.

6. Stromrichterkomponente nach einem der vorstehenden Ansprüche, wobei die Stromrichterkomponente einen steuerbaren Schütz (6a,6b,6c) umfasst, der mit der mehrfachgenutzten leistungselektronischen Baueinheit (T2, T3) gekoppelt ist und der dazu eingerichtet ist, je nach Ansteuerung die mehrfachgenutzte leistungselektronische Baueinheit (T1, T2) entweder in der Funktionalität des Antriebsumrichters oder in der Funktionalität des Leistungsstellers (1) beim Bereitstellen einer Spitzenleistung zu betreiben.

7. Stromrichterkomponente nach einem der vorstehenden Ansprüche, wobei die Stromrichterkomponente eine Glättungsdrossel (S4) umfasst, und wobei die mehrfachgenutzte leistungselektronische Baueinheit (20a) mit der einer Glättungsdrossel (S4) und/oder der Diode (D3) koppelbar ist.

## Claims

1. Power converter component for a motor vehicle having an electric drive machine (4), comprising:
a multi-use power electronics unit (T1, T2), which is configured to selectively either contribute to the functionality of a drive converter or contribute to the functionality of a power controller (1) when a peak power for operating the electric drive machine (4) is provided, wherein the multi-use power electronics unit comprises an anti-parallel circuit of two circuit breakers (T1, T2),
a series circuit of two circuit breakers (M1, M2), and
two diodes (D1, D2) which are connected in anti-parallel to the series circuit of the circuit breakers (M1, M2),
wherein the series circuit of the two circuit breakers (M1, M2) are switched with the anti-parallel diodes (D1, D2) between a positive connector (POS) and a negative connector (NEG) for connection to an intermediate circuit,
wherein the multi-use power electronics unit (T1, T2) is connected to a center tap (TN) for connecting to an intermediate circuit center point (N) and to an additional module tap (Tout1),
wherein the power converter component furthermore has a further additional module tap (Tout2), connected within the module to an AC voltage output (out) of the power converter component,
wherein the additional module tap (Tout1) can be connected to the module tap (Tout2), in order to switch the multi-use power electronics unit (T1, T2) between the AC voltage output (out) and the center tap (TN), such that the multi-use power electronics unit (T1, T2) contributes to the functionality of the drive converter, and
wherein the additional module tap (Tout1) can be separated from the module tap (Tout2) such that the multi-use power electronics unit (T1, T2) contributes to the functionality of a power controller (1) when a peak power for operating the electric drive machine (4) is provided,
wherein the power converter component furthermore has an additional diode (D3) and an additional module tap (Tout3), wherein the additional diode (D3) can be used for the functionality of the power controller.

2. Power converter component according to claim 1, wherein the series circuit of the two circuit breakers (M1, M2) is configured to contribute selectively to a 2-level drive converter functionality or to contribute to a 3-level drive converter functionality, wherein the power converter component (2) is configured, while the multi-use power electronics unit (T1, T2) contributes to the functionality of the drive converter, to be operated as a 3-level drive converter.

3. Power converter component according to claim 1 or 2, wherein the converter component (2) furthermore has a boost unit (B4) which is configured to contribute to the functionality of the power controller (1) when a basic power and the peak power for operating the electric drive machine (4) are provided.

4. Power converter component according to claim 3, wherein the boost unit (B4) comprises a circuit breaker (M3), a first diode (D6), which is connected in parallel to the circuit breaker (M3), and a second diode (D7), which is connected in series to the circuit breaker (M3) and the first diode (D6).

5. Power converter component according to one of claims 3 or 4, wherein the multi-use power electronics unit (T1, T2) and the boost unit (B4) are integrated into a semiconductor module (20a) on the basis of an A-NPC design, in which the boost unit (B4) is connected in parallel to the series circuit of two circuit breakers (M1, M2).

6. Power converter component according to one of the preceding claims, wherein the power converter component comprises a controllable contactor (6a, 6b, 6c) which is coupled to the multi-use power electronics unit (T2, T3) and which is configured to operate the multi-use power electronics unit (T1, T2), depending upon the actuation, either in terms of the functionality of the drive converter or in terms of the functionality of the power controller (1) when a peak power is provided.

7. Power converter component according to one of the preceding claims, wherein the power converter component comprises a smoothing choke (S4), and wherein the multi-use power electronics unit (20a) can be coupled to the smoothing choke (S4) and/or the diode (D3).

## Revendications

1. Composant de convertisseur de courant pour un véhicule automobile comprenant un groupe propulseur électrique (4) comprenant :
un ensemble électronique de puissance à usages multiples (T1, T2), qui est conçu soit pour contribuer de manière sélective à la fonctionnalité d'un variateur soit pour contribuer à la fonctionnalité d'un contrôleur de puissance (1) lors de la fourniture d'une puissance de crête pour faire fonctionner le groupe propulseur électrique (4), dans lequel l'ensemble électronique de puissance à usages multiples comprend un circuit antiparallèle de deux commutateurs de puissance (T1, T2),
un circuit série de deux commutateurs de puissance (M1, M2),
et deux diodes (D1, D2), qui sont commutées de manière antiparallèle au circuit série des commutateurs de puissance (M1, M2),
dans lequel le circuit série des deux commutateurs de puissance (M1, M2) est commuté avec les diodes antiparallèles (D1, D2) entre une borne plus (POS) et une borne moins (NEG) pour la liaison avec un circuit intermédiaire,
dans lequel l'ensemble électronique de puissance à usages multiples (T1, T2) est relié à une prise centrale (TN) pour la liaison avec un point central de circuit intermédiaire (N) et avec une prise de module (Tout1) supplémentaire,
dans lequel le composant de convertisseur de courant présente en outre une autre prise de module (Tout2) supplémentaire, qui est reliée de manière interne au module avec une sortie de tension alternative (out) du composant de convertisseur de courant,
dans lequel la prise de module (Tout1) supplémentaire peut être reliée à la prise de module (Tout2), afin de commuter l'ensemble électronique de puissance à usages multiples (T1, T2) entre la sortie de tension alternative (out) et la prise centrale (TN), de sorte que l'ensemble électronique de puissance à usage multiples (T1, T2) contribue à la fonctionnalité du variateur et
dans lequel la prise de module (Tout1) supplémentaire peut être séparée de la prise de module (Tout2), de sorte que l'ensemble électronique de puissance à usages multiples (T1, T2) contribue à la fonctionnalité d'un contrôleur de puissance (1) lors de la fourniture d'une puissance de crête pour faire fonctionner le groupe propulseur électrique (4),
dans lequel le composant de convertisseur de courant présente en outre une diode (D3) supplémentaire et une prise de module (Tout3) supplémentaire, dans lequel la diode (D3) supplémentaire peut être utilisée pour la fonctionnalité du contrôleur de puissance.

2. Composant de convertisseur de courant selon la revendication 1, dans lequel le circuit série des deux commutateurs de puissance (M1, M2) est conçu de manière sélective soit pour contribuer à une fonctionnalité de variateur à 2 niveaux soit pour contribuer à une fonctionnalité de variateur à 3 niveaux, dans lequel le composant de convertisseur de courant (2) est conçu pour fonctionner comme variateur à 3 niveaux pendant que l'ensemble électronique de puissance à usages multiples (T1, T2) contribue à la fonctionnalité du variateur.

3. Composant de convertisseur de courant selon la revendication 1 ou 2, dans lequel le composant de convertisseur de courant (2) présente en outre un ensemble élévateur (B4), qui est conçu pour contribuer à la fonctionnalité du contrôleur de puissance (1) lors de la fourniture d'une puissance de base et de la puissance de crête pour faire fonctionner le groupe propulseur électrique (4).

4. Composant de convertisseur de courant selon la revendication 3, dans lequel l'ensemble élévateur (B4) comprend un commutateur de puissance (M3), une première diode (D6), qui est commutée en parallèle du commutateur de puissance (M3) et une seconde diode (D7), qui est commutée en série avec le commutateur de puissance (M3) et la première diode (D6).

5. Composant de convertisseur de courant selon la revendication 3 ou 4, dans lequel l'ensemble électronique de puissance à usages multiples (T1, T2) et l'ensemble élévateur (B4) sont intégrés dans un module à semi-conducteurs (20a) sur la base d'une conception A-NPC, dans laquelle l'ensemble élévateur (B4) est commuté parallèle au circuit série de deux commutateurs de puissance (M1, M2).

6. Composant de convertisseur de courant selon l'une quelconque des revendications précédentes, dans lequel le composant de convertisseur de courant comprend un contacteur (6a, 6b, 6c) pouvant être commandé, qui est couplé à l'ensemble électronique de puissance à usages multiples (T2, T3) et est conçu pour, selon la commande de l'ensemble électronique de puissance à usages multiples (T1, T2), fonctionner soit dans la fonctionnalité du variateur soit dans la fonctionnalité du contrôleur de puissance (1) lors de la fourniture d'une puissance de crête.

7. Composant de convertisseur de courant selon l'une quelconque des revendications précédentes, dans lequel le composant de convertisseur de courant comprend une bobine de lissage (S4) et dans lequel l'ensemble électronique de puissance à usages multiples (20a) peut être couplé à la bobine de lissage (S4) et/ou à la diode (D3).
